# NEUE EUROPÄISCHE PATENTSCHRIFT

(11) **EP 0 313 603 B2**
(45) Veröffentlichungstag und Bekanntmachung des Hinweises auf die Entscheidung über den Einspruch: **17.07.1996**
(45) Hinweis auf die Patenterteilung: 24.07.1991
(21) Anmeldenummer: 88903801.4
(22) Anmeldetag: 19.04.1988
(51) Int. Cl.: C08L 95/00, C08J 3/22, C08K 7/02

(54) **VERFAHREN ZUR HERSTELLUNG VON BITUMENMASSEN**
PROCESS FOR PREPARING BITUMINOUS COMPOSITIONS
PROCEDE POUR PREPARER DES COMPOSITIONS DE BITUME

(30) Priorität: 01.05.1987 DE 3714620; 05.05.1987 DE 3714828
(43) Veröffentlichungstag der Anmeldung: 03.05.1989
(73) Patentinhaber: Rettenmaier, Stephan, D-33098 Paderborn (DE)
(72) Erfinder: Rettenmaier, Stephan, D-33098 Paderborn (DE)
(74) Vertreter: Hoeger, Stellrecht & Partner
(86) Internationale Anmeldenummer: EP8800328
(87) Internationale Veröffentlichungsnummer: WO8808438

(56) Entgegenhaltungen:
- DE-A- 2 052 720
- DE-B- 1 936 922
- DE-B- 1 936 922
- FR-A- 2 264 122
- US-A- 2 507 629
- US-A- 2 507 629
- US-A- 4 356 060
- US-A- 4 356 060
- US-A- 4 358 320
- US-A- 4 613 376

## Beschreibung

Die Erfindung betrifft ein Verfahren zum Herstellen von Bitumenmassen, die mit Füllfasern stabilisiertes Bitumen umfassen.

Im folgenden sind unter dem Begriff Bitumen sämtliche bituminösen Stoffe, umfassend Bitumen, gegebenenfalls auch polymermodifiziertes Bitumen und/oder Teer und/oder Pech, zu verstehen.

Es ist bekannt, Bitumenmassen Füllfasermaterial zuzusetzen, um die Fließeigenschaften der Bitumenmassen in der Weise zu beeinflussen, daß diese weniger stark zum Fließen neigen, d. h. die Füllfasern haben in dem Bitumen eine thixotrope Wirkung. Dies hat beispielsweise den Vorteil, daß eine Bitumenmasse in Form einer Anstrichmasse an einer senkrechten Wand dicker aufgetragen werden kann und nicht so schnell abläuft. Bei Verwendung einer Bitumenmasse auf einer Dachpappenhaut hält diese dann, wenn sie mit Füllfasern stabilisiert ist, der Sonneneinstrahlung besser Stand, da das Bitumen ortsgebundener bleibt.

Als weiteres Beispiel für eine Bitumenmasse sei eine beim Straßenbau verwendete Asphaltmischung genannt, bei welcher der Bitumenanteil dann, wenn die Bitumenmasse mit Füllfasern stabilisiert ist, wesentlich erhöht werden kann, ohne daß ein Entmischen während des Transports oder beim Auftragen auf den Straßenuntergrund entsteht.

Bei den bisher bekannten Verfahren zur Herstellung von Bitumenmassen werden die Füllfasern vielfach vor dem Zusetzen des Bitumens, gegebenenfalls mit Zuschlagstoffen, in einen Mischer eingebracht und in diesem vorgemischt. Anschließend wird das Bitumen zugesetzt.

Bei diesem Verfahren treten jedoch in der Regel Schwierigkeiten auf, da sich die Füllfasern in der Bitumenmasse nicht homogen verteilen. Diese Schwierigkeiten könnten zwar dadurch behoben werden, daß sehr kurze Füllfasern verwendet werden, diese haben jedoch den Nachteil, daß sie eine wesentlich geringere thixotrope Wirkung erzeugen als lange Füllfasern, welche ihrerseits jedoch sehr leicht zum Verwatten und Agglomerieren neigen. Gerade diese wegen ihrer starken thixotropen Wirkung bevorzugten Füllfasern können nur mit Schwierigkeiten homogen in die Bitumenmassen eingearbeitet werden.

Zum Beispiel wird für das Ausbessern von Straßenbelägen und von Deckschichtbelägen häufig eine Mischung aus Sand oder sehr feinem Split mit Bitumen verlangt. In ein derart feines Mineralkorn lassen sich insbesondere lange und zum Verwatten neigende Füllfasern auf herkömmlichen Mischanlagen nur sehr schwer einarbeiten, so daß es häufig zu Fehlmischungen kommt.

Hinzu kommt noch als weitere Schwierigkeit das Problem, daß eine Vielzahl von Bitumenmassen innerhalb sehr kurzer Zeit hergestellt werden müssen, z. B. muß der Mischvorgang bei einem bituminierten Straßenbelag bei Mischzeiten von im allgemeinen wenigen Sekunden ablaufen. Dies führt dazu, daß sich die Schwierigkeiten beim Einmischen der langen und zum Verwatten sowie Agglomerieren neigenden Füllfasern noch verstärken, so daß die Füllfasern nicht ausreichend gleichmäßig im Mischgut verteilt werden und zu "Nestern" und folglich zu Fehlmischungen führen.

Aus der US-A-2,507,629 ist ein Bitumengranulat bekannt, das Fasern umfaßt. Dieses Granulat - auch als "synthetisches Aggregat" - bezeichnet, dient dazu, als körniges und somit tragendes Material in einem Straßenbelag verwendet zu werden.

Die einzelnen Granulen dieses Granulats umfassen Bitumen und faserhaltiges Material, diese Granulen werden aber bei der Herstellung der fertigen Bitumenmasse, beispielsweise für den Straßenbelag, nicht mehr vollständig aufgelöst, sondern zu den Granulen wird zusätzlich verflüssigtes Bitumen zugegeben, welches die Granulen oberflächlich überzieht und dazu dient, daß die Granulen durch zusätzlichen äußeren Druck oberflächlich miteinander verkleben. Dadurch bilden sie einen Asphalt, der jedoch nach wie vor aus den Granulen zusammengesetzt ist und somit eine Porosität aufweist.

In der DE-A-20 52 720 ist die Imprägnierung faseriger Mineralstoffe offenbart, wobei das zugegebene Imprägniermittel für die Mineralstoffe von diesen aufgesaugt wird. Die Mineralstoffe liegen dabei als lockeres Pulver vor.

Die DE-B-19 36 922 offenbart ebenfalls einen Straßenbelag, zu dessen Herstellung zunächst ein lagerfähiges Mischgut hergestellt ist, wobei zur Herstellung des fertigen Straßenbelags einerseits das lagerfähige Mischgut, umfassend Mineralkörner, Füller und Bitumen, und andererseits Bitumen zusammengemischt werden.

Zur Herstellung des Mischguts werden dabei Granulen aus Mineralgestein hergestellt, wobei das Mineralgestein von einer Mischung aus Füller und Bitumen umgeben ist. Diese das lagerfähige Mischgut bildenden Granulen werden bei der endgültigen Herstellung des Straßenbelags ihrerseits nicht aufgelöst, sondern nur oberflächlich angelöst, so daß sie oberflächlich durch das zusätzlich zugegebene Bitumen miteinander verbunden werden.

Aus der US-A-4,356,060 ist das Überziehen von Zellulosefasern mit Tonpartikeln als Ersatzmaterial für Asbest bekannt. Dabei werden die mit Tonpartikeln überzogenen Zellulosefasern durch eine Hammermühle zerkleinert, solange bis sie die angegebenen Siebe passieren.

Der Erfindung liegt die Aufgabe zugrunde, ein Verfahren zur Herstellung von Bitumenmassen, die mit Füllfasern stabilisiertes Bitumen umfassen, derart zu verbessern, daß ohne Schwierigkeiten eine homogene Verteilung der Füllfasern in dem Bitumen erreichbar ist.

Diese Aufgabe wird erfindungsgemäß dadurch gelöst, daß bei Herstellung der Bitumenmassen Bitumen fließfähig gemacht und zum Einmischen der Füllfasern in dieses fließfähige Bitumen ein die Füllfasern umfassendes, sich in dem fließfähigen Bitumen auflösendes und die Füllfasern in dem fließfähigen Bitumen verteilendes Granulat verwendet wird, welches ein Bindemittel aufweist, das im fließfähigen Bitumen seine Bindungswirkung verliert.

Dieses Verfahren hat den großen Vorteil, daß im Gegensatz zur bisher bekannten Zugabe der Füllfasern in loser oder gepreßter Form durch die Zugabe der Füllfasern in granulierter Form bereits von Anfang an eine Grobverteilung der Füllfasern in dem fließfähigen Bitumen erreicht wird und die sich anschliessende Feinverteilung durch das sich in dem fließfähigen Bitumen auflösende Granulat erfolgen kann. Durch die Auflösung des Granulats in dem fließfähigen Bitumen werden die einzelnen Füllfasern aus einem Granulatkörper sofort von dem diesen umgebenden Bitumen erfaßt und in diesem verteilt. Damit kann die Gefahr der Bildung von Cellulosefaserbündeln und somit die Gefahr von Fehlmischungen nahezu ausgeschlossen werden.

Ein weiterer für die Führung des Verfahrens beachtlicher Vorteil ist darin zu sehen, daß die Handhabung der Cellulosefasern beim Zumischen durch die Verwendung des Granulats wesentlich vereinfacht wird, denn dieses kann aufgrund seiner guten Fließeigenschaften in einfacher Weise gefördert und dosiert werden, während die Handhabung von losen oder auch gepreßten Füllfasern, die zum Verwatten und Agglomerieren neigen, mit herkömmlichen Fördermitteln nur schwer möglich ist.

Bei der Verwendung von Asbestfasern als Füllfasern hat die Erfindung noch den weiteren Vorteil, daß bei der Herstellung der Bitumenmassen, z. B. auf einer Baustelle, keine offenen und ungebundenen Asbestfasern gehandhabt werden müssen, was aufgrund der gesundheitsschädlichen Wirkungen von Asbestfasern bedenklich wäre, sondern daß die Asbestfasern beim Einmischen in gesundheitlich unbedenklicher Form, nämlich eingebunden in Granulat, vorliegen.

Unter fließfähigem Bitumen ist dabei ein Bitumen zu verstehen, welches entweder durch Erhitzen oder durch Zusatz von geeigneten Lösungsmitteln fließfähig gemacht wurde. Das Bindemittel soll daher so ausgebildet sein, daß es entweder bei hoher Temperatur oder durch die Gegenwart von Lösungsmittel bei niedriger Temperatur seine Bindungswirkung verliert.

Durch ein derart ausgewähltes Bindemittel ist das Granulat so zusammengesetzt, daß es sich in fließfähigem Bitumen auflöst und damit die Füllfasern freigibt, so daß diese im fließfähigen Bitumen homogen verteilt werden können.

Bei einer besonders vorteilhaften Zusammensetzung des erfindungsgemäß einzusetzenden Granulats ist vorgesehen, daß der Gewichtsanteil des Bindemittels mindestens ungefähr 1/5 des Gesamtgewichts des Granulats beträgt.

Noch vorteilhafter ist es jedoch, wenn der Gewichtsanteil des Bindemittels höher ist, insbesondere mindestens 1/4 oder 1/3 des Gesamtgewichts oder gar die Hälfte des Gesamtgewichts des Granulats. Ein derart hoher Anteil von Bindemittel hat den Vorteil, daß bei der Herstellung des Granulats die Füllfasern wesentlich weniger stark strapaziert werden, da das Bindemittel selbst nämlich eine Schmierwirkung entfaltet und auch die Füllfasern in sich einbettet und damit die mechanische Beanspruchung der Füllfasern verringert.

Außerdem werden insbesondere bei hohem Bindemittelanteil die Fasern von dem zerfließenden Bindemittel mitgerissen, so daß mit Sicherheit eine Feinstverteilung der Fasern im Mischgut erfolgt.

Aus dem gleichen Grund sollte auch bei einer vorteilhaften erfindungsgemäßen Ausführungsform der Gewichtsanteil der Füllfasern höchstens ungefähr 4/5 des Gesamtgewichts des Granulats betragen. Noch vorteilhafter ist es jedoch, wenn der Gewichtsanteil der Füllfasern ungefähr 3/4 oder 2/3 oder noch besser ungefähr die Hälfte des Gesamtgewichts beträgt.

Die Angaben über die Mindestanteile von Bindemittel und die Höchstanteile von Füllfasern schließen auch 'Granulate ein, bei denen der Bindemittelanteil den Füllfasernanteil überwiegt. So kann es für besondere Anwendungen auch denkbar sein, z. B. ein Granulat mit ungefähr 10 Gew.-% Füllfasern und 90 Gew.-% Bindemittel vorzusehen.

Als besonders vorteilhaft hat es sich erwiesen, wenn die Gewichtsanteile des Bindemittels und der Füllfasern ungefähr gleich groß sind.

Die vorstehend beschriebenen erfindungsgemäß einzusetzenden Granulate können ausschließlich aus Bindemittel und Füllfasern zusammengesetzt sein, wobei das Bindemittel und die Füllfasern weitgehend gleichmäßig miteinander vermischt sind. Es soll jedoch durch die vorstehend angegebenen Gewichtsanteile nicht ausgeschlossen sein, daß dem erfindungsgemäß einzusetzenden Granulat noch weitere Zuschlagstoffe beigegeben werden. Beispielsweise kann es sich hierbei um Zuschlagstoffe handeln, welche die Füllfasern beim Herstellen des Granulats noch besser vor mechanischen Einwirkungen schützen. Es ist jedoch aber auch an Zuschlagstoffe zu denken, welche das Auflösen des Granulats in dem fließfähigen Bitumen und insbesondere dabei das Lösen der einzelnen Füllfasern voneinander verbessern oder gar an Zuschlagstoffe, welche für die spätere Bitumenmasse wichtig sind, so daß bereits die Zugabe dieser Zuschlagstoffe zu dem Granulat eine spätere getrennte Zugabe dieser Zuschlagstoffe erübrigt.

Wie bereits eingangs beschrieben, sollten die für das erfindungsgemäß einzusetzende Granulat verwendeten Füllfasern möglichst lang sein, um eine möglichst gute thixotrope Wirkung zu erzeugen. Hierbei hat es sich als günstig erwiesen, wenn die Füllfasern eine Länge im Bereich von ungefähr 0,01 bis 6 mm haben. Vorteilhafter ist jadoch eine durchschnittliche Länge der Füllfasern, die im Bereich von ungefähr 0,5 bis 3 mm liegt. Im Rahmen eines besonders bevorzugten Ausführungsbeispiels des erfindungsgemäß einzusetzenden Granulats wurden Füllfasern mit einer Länge im Bereich von ungefähr 0,5 bis 3 mm verwendet.

Bezüglich des Bindemittels sind mehrere Möglichkeiten denkbar. Beispielsweise kann ein Bindemittel, welches in durch Erhitzen fließfähigem Bitumen seine Bindungswirkung verlieren soll, aus einem Stoff bestehen, dessen Schmelzpunkt unterhalb dem des Bitumens liegt. Andererseits ist es aber auch möglich, bei einem Bindemittel, welches seine Bindewirkung in durch Lösungsmittel fließfähig gehaltenem Bitumen verlieren soll, einen Stoff zu verwenden, der sich in dem jeweiligen Lösungsmittel ebenfalls auflöst. Da gegebenenfalls die Gefahr bestehen kann, daß eventuell als Bindemittel verwendete Fremdstoffe in der Bitumenmasse störend wirken, ist es vorteilhaft, wenn das Bindemittel Bitumen umfaßt. Dabei können jedoch in dem Bindemittel noch weitere Zusatzstoffe enthalten sein, welche diesem noch verbesserte Eigenschaften verleihen.

Die einfachste und vor allem kostengünstigste Form des Bindemittels besteht jedoch darin, daß das Bindemittel ausschließlich Bitumen ist.

Bei den bisher erläuterten Ausführungsbeispielen des erfindungsgemäß einzusetzenden Granulats wurden keine näheren Angaben hinsichtlich der Füllfasern als solche gemacht. Die Füllfasern können theoretisch aus allen möglichen als Thixotropiermittel geeigneten Fasern sein, z. B. auch aus Asbest. Unter Kostengesichtspunkten und auch angesichts der gesundheitsschädigenden Eigenschaften von Asbest ist es jedoch besonders vorteilhaft, wenn die Füllfasern aus pflanzlichen Stoffen herstellbar sind, insbesondere wenn die Füllfasern aus Baumwolle und/oder Linters und/oder Holz herstellbar sind.

Bei praktischen Versuchen hat sich ergeben, daß eine gute thixotrope Wirkung und eine gute Beständigkeit der Füllfasern dann gegeben ist, wenn die Füllfasern Cellulosefasern umfassen. Am vorteilhaftesten ist es hierbei, wenn die Füllfasern ausschließlich Cellulosefasern sind.

Die besten thixotropen Eigenschaften sind dann erhältlich, wenn die Cellulosefasern feinfibrilliert aufgemahlen sind.

Zur Herstellung eines Füllfasern umfassenden Granulats ist vorgesehen daß Bindemittel und Füllfasern mit den vorstehend beschriebenen Eigenschaften und den vorstehend beschriebenen Gewichtsanteilen miteinander vermischt und granuliert werden.

Insbesondere hat es sich als zweckmäßig erwiesen, wenn das Granulieren durch Extrudieren der Mischung aus Bindemittel und Füllfasern erfolgt.

Außerdem ist ein Verfahren vorteilhaft, bei welchem das Granulieren durch Auswalzen der Mischung aus Füllfasern und Bindemittel in Fladen sowie ein sich anschließendes Zerschneiden der Fladen erfolgt.

Im Rahmen der vorliegenden Erfindung sind unter dem Begriff Bitumen - wie eingangs erwähnt - sämtliche bituminösen Produkte zu verstehen. Aus Kostengründen und aus Gründen der weiten Verbreitung ist es erfindungsgemäß besonders vorteilhaft, das Erdölprodukt Bitumen oder dessen verbesserte Produkte zu verwenden.

Weitere Merkmale und Vorteile der erfindungsgemäßen Verfahren sowie des erfindungsgemäß einzusetzenden Granulats sind Gegenstand des nachstehend beschriebenen Ausführungsbeispiels.

Zur Herstellung des erfindungsgemäß einzusetzenden Granulats werden feinfibrilliert aufgemahlene Cellulosefasern mit einer Länge zwischen 0,5 und 3 mm sowie Bitumen jeweils mit gleichen Gewichtsanteilen so lange miteinander vermischt, bis eine im wesentlichen gleichmäßige Verteilung der Komponenten erreicht ist und unter Verwendung eines Extruders in bekannter Weise granuliert.

Alternativ dazu kann auch das Granulieren dadurch erfolgen, daß das Gemisch aus Cellulosefasern und Bitumen mittels eines Walzwerks zu einem Fladen ausgewalzt wird, der durch nachgeschaltete Schneidmaschinen zu Granulaten beliebiger Größe geschnitten werden kann.

Dieses Granulat aus Bitumen und Cellulosefasern hat nun den Vorteil, daß es sich sehr leicht verpacken und transportieren läßt. Außerdem kann dieses Granulat beim Herstellen, beispielsweise von Asphalt, über eine automatische Transport- und Dosiervorrichtung zugegeben werden, da es ausgezeichnete Fließeigenschaften hat.

Bei der Herstellung von Asphalt für Straßenbeläge werden üblicherweise die Mineralstoffe im Mischer vorgelegt. Im Gegensatz zu den bisher bekannten Verfahren erübrigt sich ein Vormischen der Mineralstoffe mit der anschließend zugegebenen Cellulose, da durch die Zugabe des erfindungsgemäßen Granulats sofort auch eine Zugabe von Bindemitteln, d. h. also Bitumen, möglich ist. Dadurch kann der Mischvorgang wesentlich schneller als bei der bisher bekannten Vorgehensweise verlaufen.

Im heißem flüssigem Bitumen lösen sich erfindungsgemäß die Granulatkörper dadurch auf, daß das in diesen als Bindemittel enthaltene Bitumen ebenfalls flüssig wird und beim Wegschmelzen und Wegfließen die einzelnen in dem Bindemittel Bitumen eingebetteten Cellulosefasern mitnimmt oder mitzieht, so daß diese Cellulosefasern gar keine Gelegenheit mehr haben, miteinander zu verwatten oder zu agglomereeren.

Aus diesem Grund kann die Gefahr von Fehlmischungen aufgrund ungleichmäßiger Verteilung von Cellulosefasern in dem Bitumen ausgeschlossen werden.

## Patentansprüche

1. Verfahren zur Herstellung von Bitumenmassen, die mit Füllfasern stabilisiertes Bitumen umfassen,
**dadurch gekennzeichnet,**
daß bei Herstellung der Bitumenmassen Bitumen fließfähig gemacht und zum Einmischen der Füllfasern in dieses fließfähige Bitumen ein die Füllfasern umfassendes, sich in dem fließfähigen Bitumen auflösendes und die Füllfasern in dem fließfähigen Bitumen verteilendes Granulat verwendet wird, welches ein Bindemittel aufweist, das in fließfähigem Bitumen seine Bindungswirkung verliert.

2. Verfahren nach Anspruch 1, dadurch gekennzeichnet, daß ein Granulat verwendet wird, bei welchem der Gewichtsanteil des Bindemittels mindestens ungefähr 1/5 des Gesamtgewichts des Granulats beträgt.

3. Verfahren nach Anspruch 2, dadurch gekennzeichnet, daß ein Granulat verwendet wird, bei welchem der Gewichtsanteil des Bindemittels mindestens ungefähr 1/4 des Gesamtgewichts des Granulats beträgt.

4. Verfahren nach Anspruch 3, dadurch gekennzeichnet, daß ein Granulat verwendet wird, bei welchem der Gewichtsanteil des Bindemittels mindestens ungefähr 1/3 des Gesamtgewichts des Granulats beträgt.

5. Verfahren nach Anspruch 4, dadurch gekennzeichnet, daß ein Granulat verwendet wird, bei welchem der Gewichtsanteil des Bindemittels mindestens ungefähr die Hälfte des Gesamtgewichts des Granulats beträgt.

6. Verfahren nach einem der Ansprüche 1 bis 5, dadurch gekennzeichnet, daß ein Granulat verwendet wird, bei welchem der Gewichtsanteil der Füllfasern höchstens ungefähr 4/5 des Gesamtgewichts des Granulats beträgt.

7. Verfahren nach Anspruch 6, dadurch gekennzeichnet, daß ein Granulat verwendet wird, bei welchem der Gewichtsanteil der Füllfasern höchstens ungefähr 3/4 des Gesamtgewichts des Granulats beträgt.

8. Verfahren nach Anspruch 7, dadurch gekennzeichnet, daß ein Granulat verwendet wird, bei welchem der Gewichtsanteil der Füllfasern höchstens ungefähr 2/3 des Gesamtgewichts des Granulats beträgt.

9. Verfahren nach Anspruch 8, dadurch gekennzeichnet, daß ein Granulat verwendet wird, bei welchem der Gewichtsanteil der Füllfasern höchstens ungefähr die Hälfte des Gesamtgewichts des Granulats beträgt.

10. Verfahren nach einem der Ansprüche 1 bis 9, dadurch gekennzeichnet, daß ein Granulat verwendet wird, bei welchem die Gewichtsanteile des Bindemittels und der Füllfasern ungefähr gleich groß sind.

11. Verfahren nach einem der Ansprüche 1 bis 10, dadurch gekennzeichnet, daß ein Granulat verwendet wird, bei welchem die Füllfasern eine Länge im Bereich von ungefähr 0,01 bis 6 mm haben.

12. Verfahren nach Anspruch 11, dadurch gekennzeichnet, daß ein Granulat verwendet wird, bei welchem die Füllfasern eine durchschnittliche Länge aufweisen, die im Bereich von ungefähr 0,5 bis 3 mm liegt.

13. Verfahren nach Anspruch 11 oder 12, dadurch gekennzeichnet, daß die Füllfasern eine Länge im Bereich von ungefähr 0,5 bis 3 mm haben.

14. Verfahren nach einem der Ansprüche 1 bis 13, dadurch gekennzeichnet, daß das Bindemittel Bitumen umfaßt.

15. Verfahren nach Anspruch 14, dadurch gekennzeichnet, daß das Bindemittel Bitumen ist.

16. Verfahren nach einem der Ansprüche 1 bis 15, dadurch gekennzeichnet, daß ein Granulat verwendet wird, bei welchem die Füllfasern aus pflanzlichen Stoffen hergestellt sind.

17. Verfahren nach Anspruch 16, dadurch gekennzeichnet, daß ein Granulat verwendet wird, bei welchem die Füllfasern aus Baumwolle hergestellt sind.

18. Verfahren nach Anspruch 16, dadurch gekennzeichnet, daß ein Granulat verwendet wird, bei welchem die Füllfasern aus Linters hergestellt sind.

19. Verfahren nach Anspruch 16, dadurch gekennzeichnet, daß ein Granulat verwendet wird, bei welchem die Füllfasern aus Holz hergestellt sind.

20. Verfahren nach einem der Ansprüche 1 bis 19, dadurch gekennzeichnet, daß die Füllfasern Zellulosefasern umfassen.

21. Verfahren nach Anspruch 20, dadurch gekennzeichnet, daß die Füllfasern Zellulosefasern sind.

22. Verfahren nach Anspruch 21, dadurch gekennzeichnet, daß die Zellulosefasern feinfibrilliert aufgemahlen sind.

## Claims

1. A process for producing bituminous materials containing bitumen stabilized with fibrous fillers, **characterized in that** during the production of the bituminous materials bitumen is made flowable, and, in order to mix the fibrous fillers into this flowable bitumen, use is made of a granulated material which contains the fibrous fillers, disintegrates in the flowable bitumen and distributes the fibrous fillers in the flowable bitumen and which comprises a binder which loses its binding capacity in flowable bitumen.

2. A process according to Claim 1, **characterized in that** a granulated material is used in which the proportion by weight of the binder amounts to at least approximately 1/5 of the total weight of the granulated material.

3. A process according to Claim 2, **characterized in that** a granulated material is used in which the proportion by weight of the binder amounts to at least approximately 1/4 of the total weight of the granulated material.

4. A process according to Claim 3, **characterized in that** a granulated material is used in which the proportion by weight of the binder amounts to at least approximately 1/3 of the total weight of the granulated material.

5. A process according to Claim 4, **characterized in that** a granulated material is used in which the proportion by weight of the binder amounts to at least approximately half of the total weight of the granulated material.

6. A process according to one of Claims 1 to 5, **characterized in that** a granulated material is used in which the proportion by weight of the fibrous fillers amounts to at most approximately 4/5 of the total weight of the granulated material.

7. A process according to Claim 6, **characterized in that** a granulated material is used in which the proportion by weight of the fibrous fillers amounts to at most approximately 3/4 of the total weight of the granulated material.

8. A process according to Claim 7, **characterized in that** a granulated material is used in which the proportion by weight of the fibrous fillers amounts to at most approximately 2/3 of the total weight of the granulated material.

9. A process according to Claim 8, **characterized in that** a granulated material is used in which the proportion by weight of the fibrous fillers amounts to at most approximately half of the total weight of the granulated material.

10. A process according to one of Claims 1 to 9, **characterized in that** a granulated material is used in which the proportions by weight of the binder and the fibrous fillers are approximately equal.

11. A process according to one of Claims 1 to 10, **characterized in that** a granulated material is used in which the fibrous fillers have a length in the region of approximately 0.01 to 6 mm.

12. A process according to Claim 11, **characterized in that** a granulated material is used in which the fibrous fillers have an average length in the region of approximately 0.5 to 3 mm.

13. A process according to Claim 11 or 12, **characterized in that** a granulated material is used in which the fibrous fillers have a length in the region of approximately 0.5 to 3 mm.

14. A process according to one of Claims 1 to 13, **characterized in that** the binder contains bitumen.

15. A process according to Claim 14, **characterized in that** the binder is bitumen.

16. A process according to one of Claims 1 to 15, **characterized in that** a granulated material is used in which the fibrous fillers are produced from plant material.

17. A process according to Claim 16, **characterized in that** a granulated material is used in which the fibrous fillers are produced from cotton.

18. A process according to Claim 16, **characterized in that** a granulated material is used in which the fibrous fillers are produced from linters.

19. A process according to Claim 16, **characterized in that** a granulated material is used in which the fibrous fillers are produced from wood.

20. A process according to one of Claims 1 to 19, **characterized in that** the fibrous fillers contain cellulose fibres.

21. A process according to Claim 20, **characterized in that** the fibrous fillers are cellulose fibres.

22. A process according to Claim 21, **characterized in that** the cellulose fibres are ground so as to be finely fibrillated.

## Revendications

1. Procédé de préparation de masses bitumineuses, qui comportent du bitume stabilisé par des charges fibreuses, caractérisé en ce que, lors de la préparation des masses bitumineuses, on rend fluide du bitume et, pour l'incorporation de fibres de charge dans ce bitume fluide, on utilise un produit de granulation qui comporte les fibres de charge, se désagrège dans le bitume fluide et répartit les fibres de charge dans le bitume fluide et qui présente un liant qui perd son action de liage dans du bitume fluide.

2. Procédé suivant la revendication 1, caractérisé en ce qu'on utilise un produit de granulation dans lequel la fraction en poids du liant est au moins d'environ 1/5 du poids total du produit de granulation.

3. Procédé suivant la revendication 2, caractérisé en ce qu'on utilise un produit de granulation dans lequel la fraction en poids du liant est au moins d'environ 1/4 du poids total du produit de granulation.

4. Procédé suivant la revendication 3, caractérisé en ce qu'on utilise un produit de granulation dans lequel la fraction en poids du liant est au moins d'environ 1/3 du poids total du produit de granulation.

5. Procédé suivant la revendication 4, caractérisé en ce qu'on utilise un produit de granulation dans lequel la fraction en poids du liant est au moins d'environ la moitié du poids total du produit de granulation.

6. Procédé suivant l'une des revendications 1 à 5, caractérisé en ce qu'on utilise un produit de granulation dans lequel la fraction en poids des fibres de charge est au maximum d'environ 4/5 du poids total du produit de granulation.

7. Procédé suivant la revendication 6, caractérisé en ce qu'on utilise un produit de granulation dans lequel la fraction en poids des fibres de charge est au maximum d'environ 3/4 du poids total du produit de granulation.

8. Procédé suivant la revendication 7, caractérisé en ce qu'on utilise un produit de granulation dans lequel la fraction en poids des fibres de charge est au maximum d'environ 2/3 du poids total du produit de granulation.

9. Procédé suivant la revendication 8, caractérisé en ce qu'on utilise un produit de granulation dans lequel la fraction en poids des fibres de charge est au maximum d'environ la moitié du poids total du produit de granulation.

10. Procédé suivant l'une des revendications 1 à 9, caractérisé en ce qu'on utilise un produit de granulation dans lequel les fractions en poids du liant et des fibres de charge sont approximativement identiquement grandes.

11. Procédé suivant l'une des revendications 1 à 10, caractérisé en ce qu'on utilise un produit de granulation dans lequel les fibres de charge ont une longueur de l'ordre d'environ 0,01 à 6 mm.

12. Procédé suivant la revendication 11, caractérisé en ce qu'on utilise un produit de granulation dans lequel les fibres de charge présentent une longueur moyenne qui est de l'ordre d'environ 0,5 à 3 mm.

13. Procédé suivant l'une des revendications 11 et 12, caractérisé en ce que les fibres de charge présentent une longueur de l'ordre d'environ 0,5 à 3 mm.

14. Procédé suivant l'une des revendications 1 à 13, caractérisé en ce que le liant comprend du bitume.

15. Procédé suivant la revendication 14, caractérisé en ce que le liant est du bitume.

16. Procédé suivant l'une des revendications 1 à 15, caractérisé en ce qu'on utilise un produit de granulation dans lequel les fibres de charge sont préparées à partir de substances végétales.

17. Procédé suivant la revendication 16, caractérisé en ce qu'on utilise un produit de granulation dans lequel les fibres de charge sont préparées à partir de coton.

18. Procédé suivant la revendication 16, caractérisé en ce qu'on utilise un produit de granulation dans lequel les fibres de charge sont préparées à partir de linters.

19. Procédé suivant la revendication 16, caractérisé en ce qu'on utilise un produit de granulation dans lequel les fibres de charge sont préparées à partir de bois.

20. Procédé suivant l'une des revendications 1 à 19, caractérisé en ce que les fibres de charge comportent des fibres de cellulose.

21. Procédé suivant la revendication 20, caractérisé en ce que les fibres de charge sont des fibres de cellulose.

22. Procédé suivant la revendication 21, caractérisé en ce que les fibres de cellulose sont broyées en fines fibrilles.
